# EUROPEAN PATENT SPECIFICATION

(11) **EP 2 468 539 B1**
(45) Date of publication and mention of the grant of the patent: **06.04.2016**
(21) Application number: 10809811.2
(22) Date of filing: 21.07.2010
(51) Int. Cl.: B60C 17/00, B60C 1/00, B60C 9/14, B60C 13/02, B60C 5/14

(54) **RUN-FLAT TIRE**
REIFEN MIT NOTLAUFRING
PNEU À ROULEMENT À PLAT

(30) Priority: 20.08.2009 JP 2009191249
(43) Date of publication of application: 27.06.2012
(73) Proprietor: Sumitomo Rubber Industries, Ltd., Kobe-shi, Hyogo 651-0072 (JP)
(72) Inventor: HINO Hidehiko, Kobe-shi Hyogo 651-0072 (JP); HANYA Masahiro, Kobe-shi Hyogo 651-0072 (JP)
(74) Representative: Manitz, Finsterwald & Partner GbR
(86) International application number: PCT/JP2010/062241
(87) International publication number: WO 2011/021466

(56) References cited:
- WO-A1-2004/013222
- DE-A1-102007 049 873
- JP-A- 4 238 703
- JP-A- 4 297 310
- JP-A- 7 331 536
- JP-A- 2004 231 861
- JP-A- 2004 249 888
- JP-A- 2004 330 822
- JP-A- 2004 359 097
- JP-A- 2007 137 370
- JP-A- 2007 182 095
- JP-A- 2008 273 288
- JP-A- 2009 184 510

## Description

### TECHNICAL FIELD

The present invention relates to a run-flat tire in which run-flat endurance can be greatly improved. The features of the preamble of the independent claim are known from DE 10 2007 049873 A1. Related technologies are known from JP 2004-249888 A, WO 2004/013222 A1, JP 2008-273288 A, JP 2004-359097 A, JP 2007-182095 A, JP 2007-137370 A, JP 4-238703 A and JP 4-297310 A.

### BACKGROUND OF THE INVENTION

Recently, a side-reinforced type run-flat tire is known to be provided inside a sidewall portion with a side-reinforcement rubber layer having a substantially crescent cross-sectional shape. In such a run-flat tire, a side-reinforcement rubber layer supports tire load in place of air pressure at a time of puncture, for example, and can continuously run over a certain distance at a speed of from 60 to 80 km/h (hereinafter such a running may be called "run-flat running").

However, in spite of a run-flat tire, in the side-reinforcement rubber layer, heat generates according to the running distance at the run-flat running. When going beyond bounds, because of heat degradation, the run-flat tire eventually becomes destructed. In order to delay the destruction of this side-reinforcement rubber layer to extend a run-flat running distance, a run-flat tire provided on a tire cavity side of the bead portion with heat-conducting rubber to discharge the heat of the ti re members is proposed (see the following Patent document 1, for example). This side-reinforcement rubber layer is disposed so as to contact with the rim; therefore, the heat of the tire member is discharged via rim.
Patent document 1: Japanese Unexamined Patent Application Publication No. 2007-182095

### DISCLOSURE OF THE INVENTION

### PROBLEM TO BE SOLVED BY THE INVENTION

However, a radially outer end of the above-mentioned heat-conducting rubber terminated more inwardly than the radially outer end of the rim flange. For this reason, it was ineffective to lower the heat of the side-reinforcement rubber layer itself where the heat the most commonly gene rated at the ti me of the run-flat runni ng, and there was still a space to improve the run-flat endurance.

It is therefore, in view of the above-mentioned problems, an object of the present invention to provide a run-flat tire of which run-flat endurance is significantly enhanced on a basis of disposing
a heat-conducting rubber having a coefficient of thermal conductivity of not less than 0.3 W/(m · K) on an inner cavity surface of the tire, and
at least part of the heat-conducting rubber in a side-reinforcement rubber layer projection area where a side-reinforcement rubber layer is projected onto the inner cavity surface of the tire.

### MEANS OF SOLVING THE PROBLEMS

To solve the above-mentioned problems, the present invention, as defined in the independent claim, relates to a run-flat tire provided with a carcass extending from a tread portion through a sidewall portion to a bead core of a bead portion and a side-reinforcement rubber layer having a crescent-shaped cross-section and being disposed inside the carcass in said sidewall portion; characterized in that
a heat-conducting rubber having a coefficient of thermal conductivity of not less than 0.3 W/(m · K) is disposed on the inner cavity surface of the tire, and
at least part of the heat-conducting rubber is disposed in a side-reinforcement rubber layer projection area where the side-reinforcement rubber layer is projected onto the inner cavity surface of the tire.

### EFFECTS OF THE INVENTION

The run-flat tire according to the present invention comprises at least part of the heat-conducting rubber having the coefficient of thermal conductivity of not less than 0.3 W/(m · K) di sposed on the inner cavity surface of the tire. This heat-conducting rubber can absorb a heat generated from the side-reinforcement rubber layer at the time of the run-flat running and can release the heat into the tire cavity.

Therefore, the run-flat endurance can be greatly improved.

### BRIEF EXPLANATION OF DRAWING

[Fig. 1] A cross-sectional view showing an embodiment of the run-flat tire according to the present invention.
[Fig. 2] An enlarged cross-sectional view showing a sidewall portion and the like of Fig. 1.
[Fig. 3] A cross-sectional view showing a heat-conducting rubber extending to an outside surface of the bead portion.
[Fig. 4] A cross-sectional view showing the run-flat tire and a rim at the time of run-flat running.
[Fig. 5] A cross-sectional view of the heat-conducting rubber of which an outer end terminates within a side-reinforcement rubber layer projection area.
[Fig. 6] Across-sectional viewof the heat-conducting rubber of which an inner end terminates within the side-reinforcement rubber layer projection area.
[Figs. 7] (a): An enlarged cross-sectional view of the sidewall portion having dimples; (b): a partial side view of (a).
[Figs. 8] (a): A cross-sectional view of the run-flat tire without heat-conducting rubber; (b): a cross-sectional view of the run-flat tire provided outside the side-reinforcement rubber layer projection area with a heat-conducting rubber.

### EXPLANATION OF THE REFERENCE

- 1: Run-flat tire
- 2: Tread portion
- 3: sidewall portion
- 4: Bead portion
- 5: Bead core
- 6: Carcass
- 11: Heat-conducting rubber
- 12: Inner cavity surface of tire

### BEST MODE FOR CARRYING OUT THE INVENTION

Hereinafter, an embodiment of the present invention will be described with referent to the drawings.

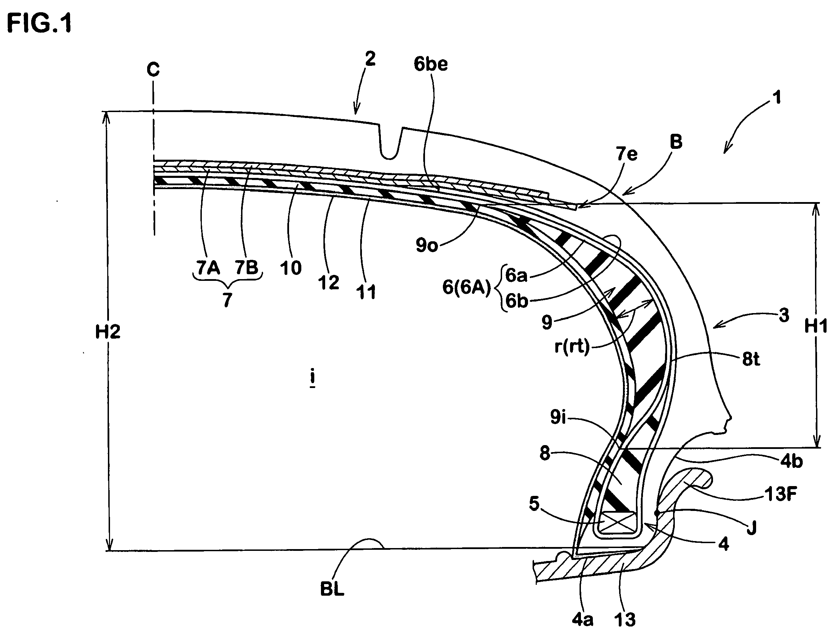

As shown in Fig. 1, a run-flat tire 1 of the present embodiment comprises
a carcass 6 extending from a tread portion 2 to a bead core 5 of a bead portion 4 through a sidewall portion 3,
a belt layer 7 di sposed outsi de thi s carcass 6 i n the radial di recti on of the tire and inside the tread portion 2, and
a side-reinforcement rubber layer 9 disposed inside the carcass 6 in the sidewall portion 3.

The run-flat tire of the present embodiment is a tire for passenger car and is provided inside the carcass 6 or the side-reinforcement rubber layer 9 with an inner liner rubber 10.

The carcass 6 is formed by layering not less than a single carcass ply, one carcass ply 6A in the present embodiment, having a radial structure made of carcass cord arranged at an angle of 80 to 90 degrees with respect to the tire equator C, for example. The carcass cord is made of an organic fiber cord such as polyester, nylon, rayon, aramid and the like or a steel cord as necessary, for example.

Moreover, the carcass ply 6A comprises a main portion 6a extending from the tread portion 2 to the bead core 5 of the bead portion 4 through the sidewall portion 3, and a turned up portion 6b connected to this main portion 6a and turned up around the bead core 5 from the axially inside to the axially outside of the tire. Between the main portion 6a and the turned up portion 6b of the carcass ply 6A, there is a bead apex rubber 8 extending from the bead core 5 outwardly in the radial direction of the tire and made of hard rubber. The bead portion 4 is arbitrarily reinforced.

In the present embodiment, the turned up portion 6b of the carcass 6 is turned over the above-mentioned bead apex rubber 8 outwardly in the radial direction, and the outer end portion 6be thereof terminates between the main portion 6a and the belt layer 7, that is to say, it has a so-called super high-turned-up structure. Therefore, in using such a single carcass ply 6A, the sidewall portion 3 can be effectively reinforced. Moreover, the outer end portion 6be of the turned up portion 6b is away from the sidewall portion 3 which greatly deflects at the time of run-flat running; therefore, damage occurred from the outer end portion 6be can be preferably suppressed.

The above-mentioned belt layer 7 is formed by layering not less than two belt plies, two radially inner and outer belt plies 7A and 7B in the present example, made of belt cords arranged at a small angle of 10 to 35 degrees with respect to the ti re equator C, for example. This belt layer 7 improves belt rigidity by the belt cords intersecting between the plies and reinforces the tread portion 2. For the belt cord, a steel cord is used in the present embodiment, but highly elastic organic fiber cords such as aramid, rayon can be also used if necessary.

The above-mentioned side-reinforcement rubber layer 9 is disposed continuously in the tire circumferential direction inside axially the carcass 6 and outside axially the inner liner rubber 10. And, the side-reinforcement rubber layer 9 is substantially crescent in cross portion having a thickness (r) measured in the normal direction to the carcass ply 6A is tapered from a central portion toward a radially inner end 9i and a radially outer end 9o.

The above-mentioned inner end 9i of the side-reinforcement rubber layer 9 is disposed, for example, on an inner side of the outer end 8t of the bead apex rubber 8 in the tire radial direction and on an outer side of the bead core 5 in the radial direction of the tire. Therefore, a bending rigidity from the sidewall portion 3 to the bead portion 4 can be improved in a good balance. Moreover, the outer end 9o of the side-reinforcement rubber layer 9 is, for example, disposed on an axially inner side of the outer end 7e of the belt layer 7. Therefore, the rigidity of a buttress portion B and the like is effectively increased.

A radial length H1 between the inner end 9i and the outer end 9o of the side-reinforcement rubber layer 9 is preferably approximately from 35 to 70% of a tire cross-sectional height H2 from a bead base line BL, for example. When the tire is for a passenger car, for example, a maximal thickness (rt) of the side-reinforcement rubber layer 9 is preferably in a range of approximate from 5 to 20 mm. Moreover, a rubber hardness of the side-reinforcement rubber layer 9 is preferably set to approximately from 60 to 95 degrees, for example. These constructions highly improve the ride comfort and sidewall reinforce efficacy in a good valence.

In this description, unless otherwise noted, each dimension of portions of the tire including the above-mentioned dimensions is measured under regular state of the tire mounted on a regular rim inflated to a regular pressure and loaded with no load.

The "regular rim" is a rim determined for each tire by a standard including one on whi ch the ti re is based. For example, it is a standard rim in the case of JATMA, a "Design Rim" in the case of TRA, and a "Measuring Rim" in the case of ETRTO.

The "regular internal pressure" means an air pressure determined for each tire by the standard. For example, it is the maximum air pressure in JATMA, the maximum value described in a table "TIRE LOAD LIMITS AT VARIOUS COLD INFLATION PRESSURES" in the case of TRA, and the "INFLATION PRESSURE" in the case of ETRTO.

Moreover, in the present specification, the rubber hardness is type-A durometer hardness in reference to JIS-K6253 measured under a condition of a temperature of 23 degrees C.

The above-mentioned inner liner rubber 10 is toroidally substantially disposed astride the bead portions 4 and 4 to keep air in the ti re cavity (i). And, for the inner liner rubber 10, a rubber composition has gas barrier property such as butyl rubber, halogenoid butyl rubber and the like.

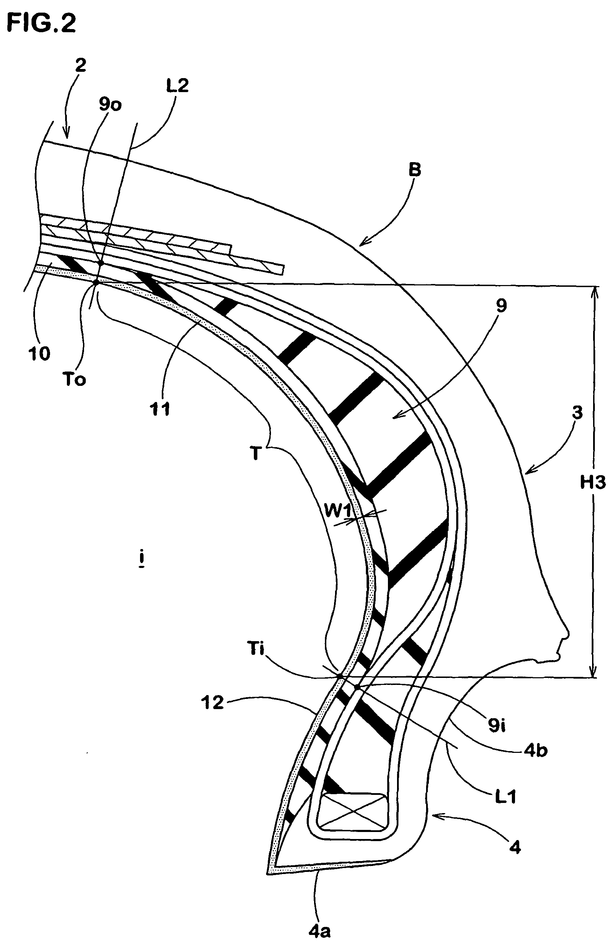

The run-flat tire 1 of the present embodiment is provided on the inner cavity surface 12 of the tire with a heat-conducting rubber 11 having a coeffi ci ent of thermal conductivity of not less than 0.3 W/(m · K). At least part of this heat-conducting rubber 11 is, as shown in Fig. 2, disposed in a side-reinforcement rubber layer projection area T where the side-reinforcement rubber layer 9 is projected onto the inner cavity surface 12 of the tire. The heat-conducting rubber 11 of the present embodiment is disposed over the entire range of the inner cavity surface of the tire 12 including the side-reinforcement rubber layer projection area T.

The "side-reinforcement rubber layer projection area T" is a region between normal lines L1 and L2 extending from the outer end 9o and the inner end 9i of the side-reinforcement rubber layer 9 to the inner cavity surface of the tire 12. Also, in Fig. 2, intersection points Ti and To where these normal lines L1 and L2 intersect with the inner cavity surface of the tire 12.

The heat conductivity of the heat-conducting rubber 11 in the present description is measured with a measuring machine "QTM-D3" manufactured by KYOTO ELECTRONICS MANUFACTURING CO., LTD. under the following conditions:
Measured temperature: 25 degrees C;
Measurement time: 60 seconds;
Test piece: Test piece having the same rubber composition as the heat-conducting rubber;
Test pi ece shape: Plate-like, 100 mm long, 50 mm wide, 10 mm thick;
Surface aspect of test piece: Smooth.

The heat-conducting rubber 11 is formed of such a rubber having high heat conductivity. Therefore, the heat-conducting rubber 11 absorbs the heat of the side-reinforcement rubber layer 9 itself generating at the time of the run-flat running and moves the heat quickly to a side of the inner cavity surface 12 of the tire and to the tire cavity (i). Therefore, the destruction of the side-reinforcement rubber layer 9 caused by the heat degradation becomes suppressed, and the run-flat endurance becomes significantly improved.

Moreover, in the present embodiment, the heat-conducting rubber 11 is disposed over the entire range of the inner cavity surface of the tire 12, so that not only the side-reinforcement rubber layer 9 but also the tread portion 2 and the buttress portion B and the like can release the heat into the ti re cavity (i). Therefore, the run-fl at endurance becomes much better.

Such a heat-conducting rubber 11 can be obtained, for example, by cross-linking the heat-conducting material and rubber composition comprising the heat-conducting material dispersed in the base material rubber and this base material.

In view of crack resistance and processability, the base material rubber of the heat-conducting rubber 11, it is preferable to contain diene rubber. Also, a ratio of the amount of the diene rubber to the total amount of the base material rubber of preferably not less than 40% by mass, more preferably not less than 50% by mass, much more preferably not less than 60% by mass.

The diene rubber includes, for example, natural rubber (NR), epoxidized natural rubber (ENR), butadiene rubber (BR), styrene-butadi ene copolymer (SBR), isoprene rubber (IR), butyl rubber (IIR), acrylonitrile-butadiene copolymer (NBR), polychloroprene (CR), styrene-isoprene-butadiene copolymer (SIBR), styrene-isoprene copolymer, and isoprene-butadiene copolymer. These can be used independently or with a combination of not less than two species. Especially, to obtain the low heat generation property and the run-flat endurance, it is preferable to use NR, IR, BR, and SBR, and it is preferable to include at least NR and/or IR. Moreover, BR is preferably modified BR, and SBR is preferable modified SBR.

The modified SBR includes the SBR modified by a compound shown in the following formula (1). 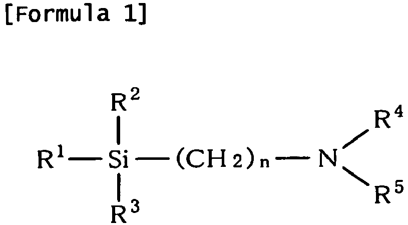 (In the above-mentioned formula, R1, R2, and R3 are the same or different: alkyl group, alkoxy group, silyloxy group, acetal group, carboxyl group, mercapto group or the derivative thereof. R4 and R5 are the same or different: hydrogen atom or alkyl group. "n" is a whole number.) A marketed product of the modified SBR by the formula (1) includes E15 manufactured by Asahi Kasei Chemicals corporation.

Moreover, a marketed product of the modified BR by the above-mentioned formula (1) includes, for example, modified butadiene rubber (vinyl content 15% by mass; R¹, R², and R³ = -OCH₃; R⁴ and R⁵ = -CH₂CH₃; n = 3) manufactured by Sumitomo Chemical Company, Limited.

The vinyl content of the modified BR is not more than preferably 35% by mass, more preferably not more than 25% by mass, much more preferably not more than 20% by mass. When the vinyl content is over 35% by mass, the low heat generation property is liable to be deteriorated. The lower limit of the vinyl content is not particular limited. Also, the vinyl content (1, 2 - bondi ng butadiene uni t amount) can be measured with a infrared absorption spectrometry.

The NR is not parti cul ar limited but includes, for example, SRI20, RSS#3, TSR20 and the like generally used in tire industry. Regarding the IR, a common IR can be used. The BR is not particular limited but can include, for example, BR containing "high cis" and BR having syndiotactic polybutadiene crystal. The SBR includes what is obtained in a solution polymerization method and in an emulsion polymerization method, but is not particular limited.

when the diene rubber includes the BR, a content of the BR in the diene rubber 100% by mass is preferably not less than 10% by mass, more preferably not less than 20% by mass, much more preferably not less than 30% by mass. When it is less than 10% by mass, an efficacy of the low heat generation is liable to be small. The content of the above-mentioned BR is preferably not more than 80% by mass, more preferably not more than 60% by mass, much more preferably not more than 50% by mass. When it is over 80% by mass, sufficient rubber hardness is not liable to be obtained.

when the diene rubber comprises the SBR, a content of the SBR in the diene rubber 100% by mass is not less than 10% by mass, more preferably not less than 20% by mass, much more preferably not less than 30% by mass. When it is less than 10% by mass, the low heat generation of the rubber becomes insufficient, and a rubber elongation (EB) becomes insufficient so that sufficient heat resistance is not liable to be obtained. Moreover, a content of the above-mentioned SBR can be 100% by mass, but due to luck of adhering in consideration of the process, the rubber may fall off, and the rubber elongation (EB) may significantly deteriorate. Because of this, the content of the above-mentioned SBR is preferably not more than 80% by mass, more preferably not more than 70% by mass, much more preferably not more than 60% by mass.

when the diene rubber NR comprises NR and/or IR, a ratio of quantity of the NR and/or IR in the diene rubber 100% by mass can be arbitrarily determined. When the ratio of quantity is too small, sufficient rubber hardness is not liable to be obtained; and when it is too large, sufficient heat resistance and rubber hardness are not liable to be obtained. On this standpoint, the ratio of quantity of the NR and/or IR in the diene rubber 100% by mass is preferably not less than 20% by mass, more preferably not less than 25% by mass, much more preferably not less than 30% by mass; and is preferably not more than 80% by mass, more preferably not more than 75% by mass, much more preferably not more than 70% by mass. The "quantity of the NR and/or IR" is defined as a total quantity of both components.

The above-mentioned heat-conducting material includes metal powder, metal-oxide powder (fine spherical alumina, for example), metal fiber and carbon fiber as an example. The heat conductivity of the single heat-conducting material is preferably not less than 100 W/(m · K), more preferably not less than 120 W/(m · K).

The heat-conducting material is especially preferably coal pitch-based carbon fiber. A basic ingredient of the coal pitch-based carbon fiber is a liquid crystal where molecules orient in a single direction. Therefore, this carbon fiber has a high heat conductivity, and the heat conductivity of fiber in the axis direction is not less than 500 W/(m · K). This carbon fiber spreads in the rubber so that the heat-conducting rubber 11 having high heat conductivity can be easily obtained.

The above-mentioned coal pitch-based carbon fiber can be obtained by graphitizing treatment of a pitch fiber. This pitch fiber can be obtained by fiber spinning. A basic ingredient of the pitch fiber, coal tar, coal-tar pitch, and coal liquefied material as an example. An example of a method for manufacturing the coal pitch-based carbon fiber is disclosed in Japanese unexamined Patent Application Publication No. H7-331536.

The above-mentioned coal pitch-based carbon fiber specifically preferably has a structure of layered polyaromatic molecule. A coal pitch-based carbon fiber marked as "K6371" manufactured by Mitsubishi Plastics, Inc is a preferable and tangible example.

An average diameter of the above-mentioned coal pitch-based carbon fiber is not particular limited, but owing to spreading the carbon fiber in the rubber, good heat conductivity can be achieved. From the viewpoint of this, the lower limit of the above-mentioned average diameter is preferably not less than 1 µm, more preferably not less than 3 µm, much more preferably not less than 5 µm; and the upper limit thereof is preferably not more than 80 µm, more preferably not more than 30 µm, much more preferably not more than 20 µm. Also, the above-mentioned average diameter can be measured by observing a surface of section of the heat-conducting rubber 11 with an electronic microscope.

The average length of the coal pitch-based carbon fiber is not particular limited, but to keep a good dispersibility in the base material rubber, the lower limit is preferably not less than 0.1 mm, more preferably not less than 1 mm, much more preferably not less than 4 mm; and the upper limit is preferably not more than 30 mm, more preferably not more than 15 mm, much more preferably not more than 10 mm. Also, the average length can be measured by observing the surface of section of the heat-conducting rubber 11.

In view of the heat conductivity of the heat-conducting rubber 11, the lower limit of an aspect ratio (average length/average diameter) of the coal pitch-based carbon fiber is preferably not less than 100, more preferably not less than 300. However, in view of the dispersibility of carbon fiber, the upper limit of the above-mentioned aspect ratio is preferably not more than 2000, more preferably not more than 1000 in particular.

A combination amount of the coal pitch-based carbon fiber can be arbitrarily selectable. When it is too little, the preferable heat conductivity cannot be obtained. When it is too much, the rubber hardness and loss tangent tan δ of the rubber of the heat-conducting rubber 11 are liable to be large. On these standpoints, the combi nati on amount of the coal pitch-based carbon fiber is preferably not less than 1 part by mass, more preferably not less than 5 parts by mass, much more preferably not less than 10 parts by mass based on 100 parts by mass of the above-mentioned base material rubber. The upper limit thereof is preferably not more than 60 parts by mass, more preferably not more than 50 parts by mass, much more preferably not more than 40 parts by mass.

The rubber composition of the heat-conducting rubber 11 comprises sulfur. Rubber molecules are cross-linked together by the sulfur. With the sulfur or as substitute for the sulfur, different cross-linking agents may be used. The heat-conducting rubber 11 can be cross-linked by subjected electron beam.

Moreover, the rubber composition of the heat-conducting rubber 11 may comprise a vulcanization accelerator with the sulfur. The vulcanization accelerator includes, for example, sulfenamide type vulcanization accelerator, guanidines type vulcanization accelerator, thiazole type vulcanization accelerator, thiuram type vulcanization accelerator, and dithiocarbamate type vulcanization accelerator. In particular, a preferable vulcanization accelerator is the sulfenamide type vulcanization accelerator. The sulfenamide type vulcanization accelerator specifically includes
N-cyclohexyl-2-benzothiazolyl-sulfenamide,
N-(tert-Butyl)-2-benzothiazolesulfenamide, and
N,N-Dicyclohexyl-2-benzothiazolesulfenamide.

The rubber composition of the heat-conducting rubber 11 may comprises a reinforce member. A typical reinforce member is carbon black; for example, FEF, GPF, HAF, ISAF and/or SAF can be used. In view of a strength of the heat-conducting rubber 11, the combination amount of the carbon black is preferably not less than 5 parts by mass, more preferably not less than 15 parts by mass based on 100 parts by mass of the base material rubber. In view of kneading the rubber composition of the heat-conducting rubber 11, the upper limit of the combination amount the above-mentioned carbon black is preferably not more than 50 parts by mass, more preferably not more than 40 parts by mass.

Moreover, the rubber composition of the heat-conducting rubber 11, with the carbon black or as substitute for the carbon black, silica may be used. For the silica, anhydrated silica and hydrated silica can be used. Moreover, stearic acid, zinc oxide, age resistor, wax, cross-linking auxiliary agent or the like are added in the rubber composition of the heat-conducting rubber 11 as required.

The rubber composition of the heat-conducting rubber 11 is produced by a general method. Namely, through the use of a banbury mixer, a kneader, an open roll mill and the like, the above-mentioned respective components can be kneaded and produced. Thus, the heat-conducting rubber 11 is formed, for example, with an extrusion forming method by use of a rubber extruder and with a strip winding method of winding an elongated band-like rubber strip.

Also, to absorb more the heat of the side-reinforcement rubber layer 9, the heat conductivity of the heat-conducting rubber 11 is preferably not less than 0.45 W/(m · K), more preferably not less than 0.70 W/(m · K) in particular. However, when the above-mentioned heat-conducting material are much compounded in order to enhance the heat conductivity, the rubber hardness and the loss tangent tan δ become large, and the rolling resistance has possibility to decrease. From the viewpoint of these, the upper limit of the heat conductivity of the heat-conducting rubber 11 is not more than preferably 1.5 W/(m · K).

The loss tangent tan δ of the heat-conducting rubber 11 can be arbitrarily determined; however, when it is too small, the durability has a possibility to decrease. And when it is too large, the rolling resistance has a possibility to decrease. On this standpoint, the loss tangent tan δ of the heat-conducting rubber 11 is preferably not less than 0.05, more preferably not less than 0.07. The upper limit thereof is preferably not more than 0.15, more preferably not more than 0.10.

Moreover, a complex modulus E* of the heat-conducting rubber 11 can be arbitrarily determined; however, when it is too small, the durability of the heat-conducting rubber 11 has a possibility to decrease. And when it is too large, the rigidity of the heat-conducting rubber 11 becomes excessively improved, and the production efficiency has a possibility to decrease. On these standpoints, the complex modulus E* of the heat-conducting rubber 11 is preferably not less than 3 MPa, more preferably not less than 5 MPa; and the upper limit thereof is preferably not more than 30 MPa, more preferably not more than 25 MPa.

Also, in the present specification, the above-mentioned loss tangent tan δ and the complex modulus E* are measured through the use of a reed-shaped sample of 4 mm in width, 45 mm in length, and 2 mm in thickness and a viscoelastic spectrometer (VA-200) manufactured by SHIMADZU CORPORATION under the condition of temperature of 50 degrees C, frequency of 10 Hz, initial strain of 10%, and dynamic strain of plus or minus 1%.

This heat-conducting rubber 11 of the present embodiment has a sheet-like form having a substantially constant thickness, the maximal thickness W1 can be arbitrarily determined. However, when the above-mentioned maximal thickness W1 is too small, there is a possibility not to absorb the heat of the side-reinforcement rubber layer 9 sufficiently. And, when it is too large, the rolling resi stance becomes worse, and the tire weight becomes increased. On these standpoints, the maximal thickness W1 of the heat-conducting rubber 11 is preferably not less than 0.3 mm, more preferably not less than 0.5 mm; the upper limit thereof is preferably not more than 3.0 mm, more preferably not more than 2.0 mm.

The heat-conducting rubber 11 preferably extends, as shown in the present embodiment, from the side-reinforcement rubber layer projection area T to at least the bead bottom surface 4a of the bead portion 4 and extends in the bead bottom surface 4a in the tire axial direction. Because of this, in the heat-conducting rubber 11, the heat of the side-reinforcement rubber layer 9 can be discharged through the rim 13 contacting the bead bottom surface 4a.

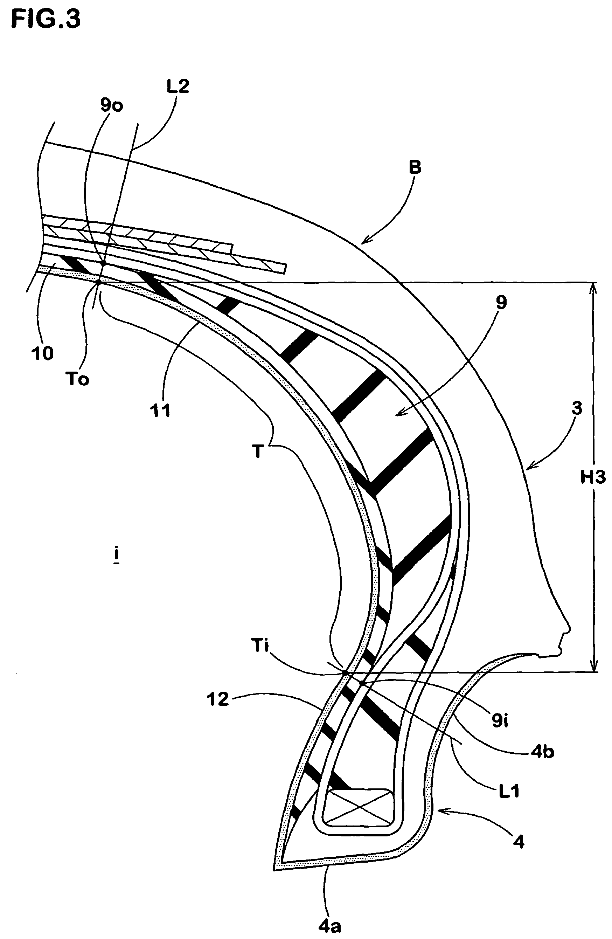

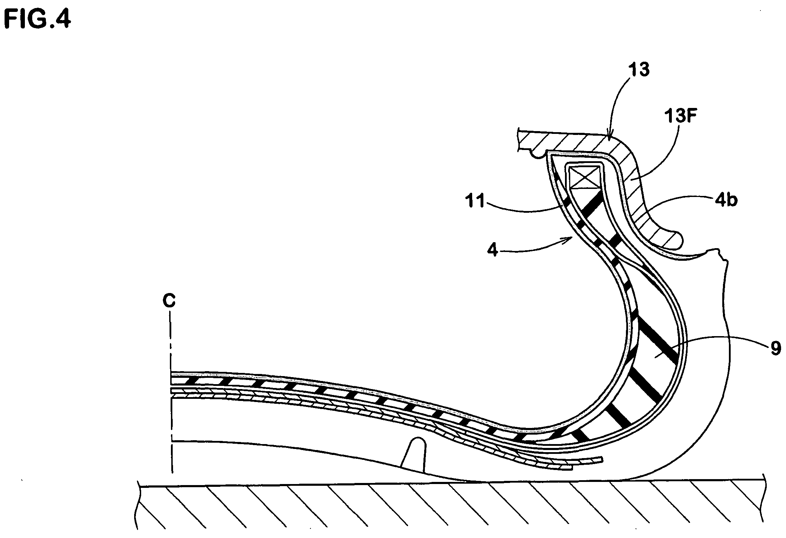

Moreover, as shown in Fig. 3, the heat-conducting rubber 11 preferably extends to the axially outside surface 4b of the bead portion 4 through the bead bottom surface 4a. This heat-conducting rubber 11 can contact widely with a rim flange 13F of the rim 13 in the run-flat running shown in Fig. 4 as well as in the normal running. Therefore, an area of contact between the heat-conducting rubber 11 and the rim 13 becomes large, and the heat of the side-reinforcement rubber layer 9 can be efficiently discharged to the outside via not only the tire cavity (i) but also via the rim 13. And, to expose at least part of the heat-conducting rubber 11 to the outside air, it is preferably disposed over a separation point J (shown in Fig. 1) between the rim flange 13F and the bead portion 4. owing to this, the heat of the side-reinforcement rubber layer 9 can be directly discharged into the ai r.

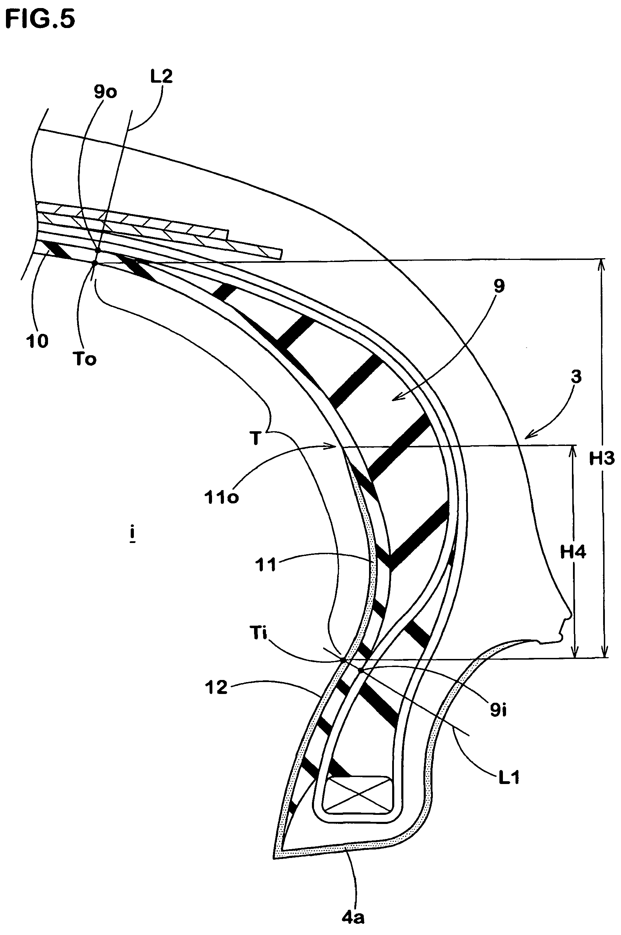

In the above-mentioned embodiment, the heat-conducting rubber 11 is disposed on a whole extent of the inner cavity surface 12 of the tire including the side-reinforcement rubber layer projection area τ as an example. It is not parti cul ar limited to this, but it can be disposed partially. For example, as shown in Fig. 5, the heat-conducting rubber 11 may terminate, for example, at the radially outer end 110 within the side-reinforcement rubber layer projection area T. The heat-conducting rubber 11 of the present embodiment extends from the bead bottom surface 4a along the inner surface of the inner liner rubber 10 toward the radially outside. This heat-conducting rubber 11 can inhibit an increase of the tire weight and can discharge the heat of the side-reinforcement rubber layer 9 into the tire cavity (i).

Moreover, a radial length H4 of the heat-conducting rubber 11 within the side-reinforcement rubber layer projection area T can be arbitrarily determined. When the radial length H4 is too small, it is possible that an efficacy of absorbing the heat of the side-reinforcement rubber layer 9 becomes relatively insufficient. On this standpoint, the radial length H4 of the heat-conducti ng rubber 11 within the side-reinforcement rubber layer projection area T is preferably not less than 30%, more preferably not less than 50% of a radial length H3 of the side-reinforcement rubber layer projection area T.

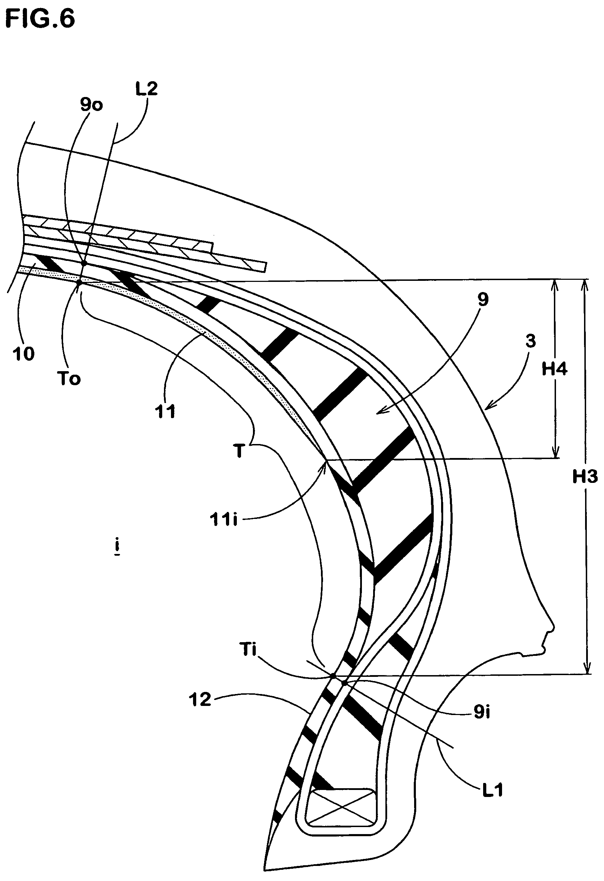

As shown in Fig. 6, the heat-conducting rubber 11 may terminate at a radially inner end 11i within the side-reinforcement rubber layer projection area T. The heat-conducting rubber 11 of this embodiment extends from the tire equator C (shown in Fig. 1) along the inner surface of the inner liner rubber 10 toward the radial inside. Also in the case, as well as the case shown in Fig. 5, the radial length H4 of the heat-conducting rubber within the side-reinforcement rubber layer projection area τ is preferably not less than 30%, more preferably not less than 50% of the radial length H3 of the side-reinforcement rubber layer projection area τ.

As shown i n Fi gs. 7 (a) and (b), i n the run-fl at ti re 1 of the present embodiment, at least one of outer surfaces 3A of the sidewall portion 3 has a number of dimples 16. Such a dimple 16 can greatly increase a surface area of the sidewall portion 3. And, when a vehicle runs owing to a tire rotation, a part of the air inflows into the dimples 16. This air inflow causes a disturbed flow in an outer surface 3A of the sidewall portion 3. Therefore, the heat of the side-reinforcement rubber layer 9 can discharge from the outer surface 3A side of the sidewall portion 3.

A diameter D2 of the dimple 16 can be arbitrarily determined, but when it is too small, the disturbed flow cannot sufficiently generate in the sidewall portion 3. when it is too large, the number of installation becomes limited. On this standpoint, the diameter D2 of the dimple 16 is preferably not less than 2 mm, more preferably not less than 6 mm; and the upper limit thereof is preferably not more than 70 mm, more preferably not more than 30 mm.

Moreover, a depth (e) of the dimple 16 is, for example, preferably not less than 0.1 mm, more preferably not less than 0.2 mm, much more preferably not less than 0.3 mm, furthermore preferably not less than 0.5 mm, particularly preferably not less than 0.7 mm, the most preferably not less than 1.0 mm. This can make a surface area of the dimple 16 large. Also, in view of a rubber thickness of the sidewall portion 3 and the like, the upper limit of the depth (e) of the dimple 16 is preferably not more than 4.0 mm, more preferably not more than 3.0 mm, much more preferably not more than 2.0 mm particularly. However, the dimple 16 may include not less than two kinds of dimples each having a different depth (e). The depth (e) of the dimple 16 is measured as the shortest distance between an imaginary line of the outer surface 3A of the sidewall portion 3 and the deepest part of the dimple 16.

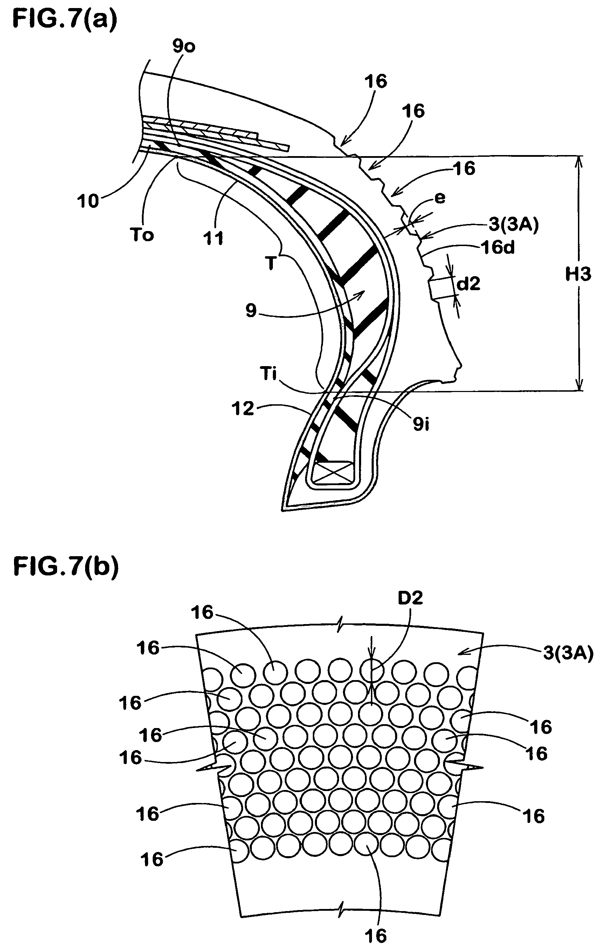

A reference code d2 shown in the Fig. 7 (a) is a diameter of the bottom surface 16d of the dimple 16. A ratio (d2/D2) between the diameter d2 of the bottom surface 16d and the diameter D2 of the dimple 16 is preferably between not less than 0.40 and not more than 0.95. The dimple 16 having the ratio (d2/D2) can have a sufficient content and a small depth (e) in a good balance. From the viewpoint of this, the above-mentioned ratio (d2/D2) is preferably not less than 0.55, more preferably not less than 0.65; and, the upper limit thereof is preferably not more than 0.85, more preferably not more than 0.80.

Although the especially preferred embodiments of the pneumatic ti re and the method for manufacturing it in the present invention have been described in detail, needless to say, the invention is not limited to the above-mentioned concrete embodiments, and various modifications can be made. In the present embodiment, the heat-conducting rubber 11 is disposed on the inner surface of the inner liner rubber 10, for example; however, it can be formed of the inner liner rubber 10 having a gas barrier property. Such a heat-conducting rubber 11 can di rectly absorb the heat of the side-reinforcement rubber layer 9 and can suppress an increase of the tire weight.

### EXAMPLE

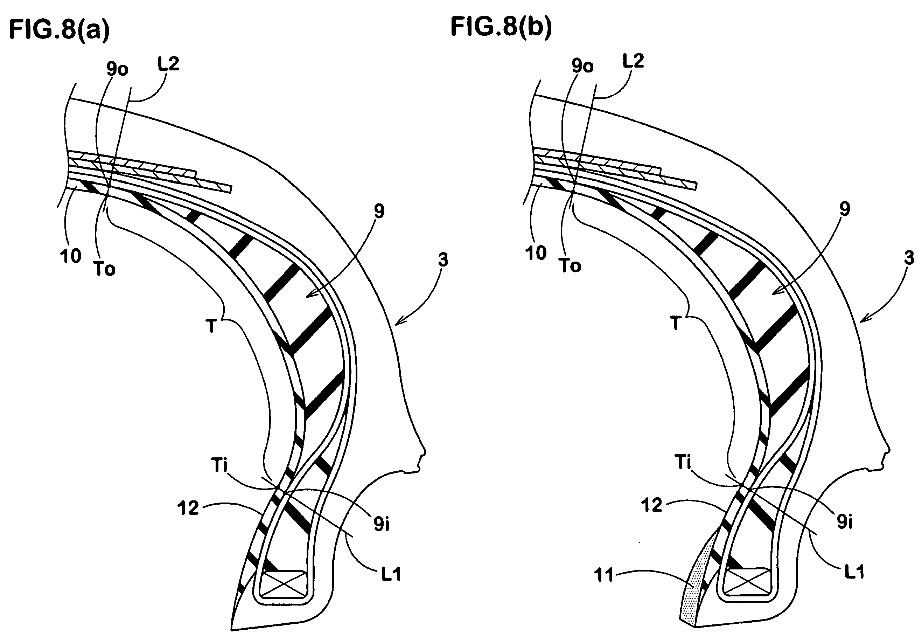

In Fig. 1, run-flat tires each having a basic tire structure excluding a heat-conducting rubber and differing only in the heat-conducting rubber were made by way of test on the basis of the specification shown in Table 1, and those properties were compared with one another. For comparison, the same tests were conducted on a run-flat tire without the heat-conducting rubber shown in Fig. 8 (a) (Comparative Example 1), and on a run-flat tire with the heat-conducting rubber outside a side-reinforcement rubber layer projection area shown in Fig. 8 (b) (Comparative Example 2).
Tire size: 245/40R18
Rim size: 18 x 8.5Js

Respective compounds of the heat-conducting rubber are shown in Table 2. The details are as follows:
Natural rubber (NR): RSS#3;
Styrene butadiene rubber (SBR): SBR1502 manufactured by Sumitomo Chemical Company, Limited;
Butadiene rubber (BR): BR150B manufactured by Ube Industries, Ltd.;
Isoprene rubber (IR): IR2200 manufactured by JSR Corporation;
Modified styrene butadiene rubber (modified SBR): E15 manufactured by Asahi Kasei Chemicals Corporation;
Modified butadiene rubber (modified BR): Modified butadiene rubber (vinyl content: 15% by mass; R¹, R² and R³ = -OCH₃; R⁴ and R⁵ = -CH₂CH₃;
n = 3) manufactured by Sumitomo Chemical Company, Limited;
carbon black: Dia black E (FEF, N2SA: 41 m²/g; DBP oil absorption quantity: 115 ml/100 g) manufactured by Mitsubishi chemical Corporation;
Silica: Ultrasil VN3 (N2SA: 152 m²/g) manufactured by Degussa Co., Ltd.;
Coal pitch-based carbon fiber: K6371T (chopped fiber; fiber diameter
in average: 11 µm; fiber length in average: 6.3 mm) manufactured by Mitsubishi Plastics, Inc.;
PAN-based carbon fiber: TORAYCA T300 manufactured by Toray Industries, Inc.;
Age resistor 6C: Antigen 6C (N-(1,3-Dimethylbutyl)-N'-phenyl-p-phenylenediamine) manufactured by Sumitomo Chemical Company, Limited;
zinc oxide: two kinds of zinc oxide manufactured by MITSUI MINING & SMELTING CO., LTD.;
Stearic acid: Tsubaki manufactured by NOF CORPORATION;
Rubber antioxidant FR: Antigen FR (purified reacted product with amine and ketone, and without residual amine; quinoline rubber antioxidant) manufactured by Sumitomo chemical company, Limited;
Sulfur: powder sulfur manufactured by Karuizawa Sulger Corporation Vulcanization accelerator: NOCCELER NS (N-tert-Butyl-2-benzothiazolyl-sulfenamide) manufactured by OUCHI SHINKO CHEMICAL INDUSTRIAL CO., LTD.;
Vulcanization accerator: Tackirol V200 manufactured by Taoka Chemical Co., Ltd..

Test method was as follows.

### <Run-flat endurance>

Each test tire was mounted on the above-mentioned rim from which a valve core was removed and ran under a situation having internal pressure of zero on a drum tester at a speed of 80 km/h and load of 4.14 kN. A running distance until the tire destruction was measured. Evaluation was displayed using indices with Comparative Example 1 being 100; and the larger the numeric value was, the more favorable it was.

### <Tire weight>

Tire weight par tire was measured, and the evaluation was defined as the reciprocal thereof using indices with comparative Example 1 being 100. The larger the numeric value was, the more favorable it was.

### <Rolling Resistance>

In use of a rolling resistance tester, each test tire was mounted on the above-mentioned rim, having internal pressure of 200 kPa. The rolling resistance was measured at a speed of 80 km/h and load of 4.14 kN, and the evaluation was defined as the reciprocal thereof using indices with Comparative Example 1 being 100. The larger the numeric value was, the more favorable it was.

Test result and the like were shown in Table 1 and Table 2.

**[Table 1-1]**

| | Ref. Ex.1 | Ref. Ex.2 | Ref. Ex.3 | Ex. 1 | Ex. 2 | Ex. 3 | Ex. 4 | Ex. 5 | Ex. 6 | Ex. 7 |
|---|---|---|---|---|---|---|---|---|---|---|
| Cross-sectional view of sidewall portion | Fig. 8 (a) | Fig. 8 (b) | Fig. 2 | Fig. 2 | Fig. 3 | Fig. 5 | Fig. 5 | Fig. 5 | Fig. 5 | Fig. 5 |
| Presence of heat-conducting rubber | None | Presence | Presence | Presence | Presence | Presence | Presence | Presence | Presence | Presence |
| Compound of heat-conducting rubber | - | Compound 2 | Compound 1 | Compound 2 | Compound 2 | Compound 2 | Compound 2 | Compound 2 | Compound 2 | Compound 2 |
| Thickness W1 of heat-conducting rubber [mm] | - | 1.0 | 1.0 | 1.0 | 1.0 | 1.0 | 1.0 | 0.5 | 1.0 | 1.5 |
| Length H3 of side-reinforcement rubber layer projection area [mm] | | 52 | 52 | 52 | 52 | 52 | 52 | 52 | 52 | 52 |
| Length H4 of heat-conducting rubber within side-reinforcement rubber layer projection area [mm] | - | 0 | 52 | 52 | 52 | 15 | 50 | 40 | 40 | 40 |
| Ratio (H4/H3) [%] | - | - | 100 | 100 | 100 | 29 | 96 | 77 | 77 | 77 |
| Complex Modulus E* of heat-conducting rubber [MPa] | - | 8.5 | 6.7 | 8.5 | 8.5 | 8.5 | 8.5 | 8.5 | 8.5 | 8.5 |
| Loss tangent tan δ of heat-conducting rubber | - | 0.075 | 0.073 | 0.075 | 0.075 | 0.075 | 0.075 | 0.075 | 0.075 | 0.075 |
| Heat conductivity [W/(m · K)] | - | 0.905 | 0.290 | 0.905 | 0.905 | 0.905 | 0.905 | 0.905 | 0.905 | 0.905 |
| Presence of dimple | None | None | None | None | None | None | None | None | None | None |
| Diameter D2 of dimple [mm] | - | - | - | - | - | - | - | - | - | - |
| Depth (e) of dimple [mm] | - | - | - | - | - | - | - | - | - | - |
| Diameter d2 of base surface portion of dimple [mm] | - | - | - | - | - | - | - | - | - | - |
| Ratio (d2/D2) | - | - | - | - | - | - | - | - | - | - |
| Run-flat endurance [index] | 100 | 103 | 106 | 136 | 141 | 122 | 138 | 131 | 132 | 131 |
| Tire weight [index] | 100 | 99 | 95 | 95 | 94 | 100 | 96 | 99 | 99 | 98 |
| Rolling resistance [index] | 100 | 100 | 97 | 97 | 96 | 100 | 98 | 100 | 100 | 99 |

**[Table 1-2]**

| | Ex. 8 | Ex. 9 | Ex. 10 | Ex. 11 | Ex. 12 | Ex. 13 | Ex. 14 | Ex. 15 | Ex. 16 | Ex. 17 |
|---|---|---|---|---|---|---|---|---|---|---|
| Cross-sectional view of sidewall portion | Fig. 5 | Fig. 5 | Fig. 5 | Fig. 5 | Fig. 5 | Fig. 6 | Fig. 6 | Fig. 6 | Fig. 6 | Fig. 7 |
| Presence of heat-conducting rubber | Presence | Presence | Presence | Presence | Presence | Presence | Presence | Presence | Presence | Presence |
| Compound of heat-conducting rubber | Compound 3 | Compound 4 | Compound 5 | Compound 6 | Compound 7 | Compound 2 | Compound 8 | Compound 9 | Compound 10 | Compound 2 |
| Thickness W1 of heat-conducting rubber [mm] | 1.0 | 0.5 | 0.5 | 0.5 | 0.5 | 1.0 | 0.5 | 0.5 | 0.5 | 1.0 |
| Length H3 of side-reinforcement rubber layer projection area [mm] | 52 | 52 | 52 | 52 | 52 | 52 | 52 | 52 | 52 | 52 |
| Length H4 of heat-conducting rubber within side-reinforcement rubber layer projection area [mm] | 40 | 40 | 40 | 40 | 40 | 20 | 40 | 40 | 40 | 52 |
| Ratio (H4/H3) [%] | 77 | 77 | 77 | 77 | 77 | 38 | 77 | 77 | 77 | 100 |
| complex Modulus E* of heat-conducting rubber [MPa] | 7.2 | 20.5 | 22.7 | 22.7 | 6.7 | 8.5 | 6.7 | 6.6 | 23.1 | 8.5 |
| Loss tangent tan δ of heat-conducting rubber | 0.077 | 0.067 | 0.069 | 0.070 | 0.061 | 0.075 | 0.062 | 0.059 | 0.060 | 0.075 |
| Heat conductivity [W/(m · K)] | 0.406 | 0.812 | 0.952 | 0.392 | 0.881 | 0.905 | 0.892 | 0.867 | 0.877 | 0.905 |
| Presence of dimple | None | None | None | None | None | None | None | None | None | Presence |
| Diameter D2 of dimple [mm] | - | - | - | - | - | - | - | - | - | 8 |
| Depth (e) of dimple [mm] | - | - | - | - | - | - | - | - | - | 1 |
| Diameter d2 of base surface portion of dimple [mm] | - | - | - | - | - | - | - | - | - | 5 |
| Ratio (d2/D2) | - | - | - | - | - | - | - | - | - | 0.63 |
| Run-flat endurance [index] | 119 | 141 | 148 | 123 | 126 | 112 | 122 | 128 | 131 | 162 |
| Tire weight [index] | 99 | 99 | 99 | 99 | 99 | 99 | 99 | 99 | 99 | 96 |
| Rolling resistance [index] | 100 | 100 | 100 | 100 | 100 | 100 | 100 | 100 | 100 | 99 |

**[Table 2]**

| | Compound 1 | Compound 2 | Compound 3 | Compound 4 | Compound 5 | Compound 6 | Compound 7 | Compound 8 | Compound 9 | Compound 9 |
|---|---|---|---|---|---|---|---|---|---|---|
| NR | 30 | 30 | 30 | 50 | 50 | 50 | - | 15 | 30 | 30 |
| SBR | 70 | 70 | 70 | 20 | 20 | 20 | 70 | 70 | - | - |
| BR | - | - | - | 30 | 30 | 30 | - | - | - | - |
| IR | - | - | - | - | - | - | 30 | 15 | - | - |
| Modified SBR | - | - | - | - | - | - | - | - | 70 | - |
| Modified BR | - | - | - | - | - | - | - | - | - | 70 |
| Carbon black | 40 | 40 | 40 | 20 | 20 | 20 | 40 | 40 | 40 | 40 |
| Silica | 20 | 20 | 20 | 5 | 5 | 5 | 20 | 20 | 20 | 20 |
| coal pitch-based carbon fiber | - | 10 | - | 10 | 20 | - | 10 | 10 | 10 | 10 |
| PAN-based carbon fiber | - | - | 10 | - | - | 20 | - | - | - | - |
| Age resistor 6C | 1.5 | 1.5 | 1.5 | 1.5 | 1.5 | 1.5 | 1.5 | 1.5 | 1.5 | 1.5 |
| zinc oxide | 3.0 | 3.0 | 3.0 | 3.0 | 3.0 | 3.0 | 3.0 | 3.0 | 3.0 | 3.0 |
| Stearic acid | 1.0 | 1.0 | 1.0 | 1.0 | 1.0 | 1.0 | 1.0 | 1.0 | 1.0 | 1.0 |
| Rubber antioxidant FR | 1.0 | 1.0 | 1.0 | 1.0 | 1.0 | 1.0 | 1.0 | 1.0 | 1.0 | 1.0 |
| Sulfur | 5.0 | 5.0 | 5.0 | 5.0 | 5.0 | 5.0 | 5.0 | 5.0 | 5.0 | 5.0 |
| vulcanization accelerator | 2.0 | 2.0 | 2.0 | 2.0 | 2.0 | 2.0 | 2.0 | 2.0 | 2.0 | 2.0 |
| vulcanization accelerator aid | 2.0 | 2.0 | 2.0 | 2.0 | 2.0 | 2.0 | 2.0 | 2.0 | 2.0 | 2.0 |
| Ratio of quantity of NR and/or IR indiene rubber 100% by mass [%] | 30 | 30 | 30 | 50 | 50 | 50 | 30 | 30 | 30 | 30 |

| | | | | | | | | | | |
|---|---|---|---|---|---|---|---|---|---|---|
| * Compound unit is "parts by mass". | | | | | | | | | | |

For the test results, it was confirmed that the run-flat tire in Example could considerably improve the run-flat endurance.

## Claims

1. A run-flat tire (1) provided with a carcass (6) extending from a tread portion (2) through a sidewall portion (3) to a bead core (5) of a bead portion (4) and a side-reinforcement rubber layer (9) having a crescent-shaped cross-section and being disposed inside the carcass (6) in said sidewall portion (3); **characterized in that**
a heat-conducting rubber (11) having a coefficient of thermal conductivity of not less than 0.3 W/(m·K) is di sposed on the inner cavity surface (12) of the tire (1), and
at least part of said heat-conducting rubber (11) is disposed in a side-reinforcement rubber layer projection area (τ) where the side-reinforcement rubber layer (11) is projected onto the inner cavity surface (12) of the tire (1), and said heat-conducting rubber (11) comprises
base material rubber comprising diene rubber, and
coal pitch-based carbon fiber.

2. The run-flat tire as set forth in claim 1, **characterized in that** said heat-conducting rubber (11) extends from said side-reinforcement rubber layer projection area (T) to at least a bead bottom surface (4a) of said bead portion (4).

3. The run-flat tire as set forth in claim 2, **characterized in that** said heat-conducting rubber (11) extends through said bead bottom surface (4a) to an axially outside surface (4b) of said bead portion (4).

4. The run-flat tire as set forth in any one of claims 1 to 3, **characterized in that** said heat-conducting rubber (11) is disposed on a whole extent of the inner cavity surface (12) of the tire (1).

5. The run-flat tire as set forth in any one of claims 1 to 3, **characterized in that**
a radially inner end (11i) or a radially outer end (11o) of said heat-conducting rubber (11) terminates within the side-reinforcement rubber layer projection area (τ), and
a radial length (H4) of the heat-conducting rubber (11) within the side-reinforcement rubber layer projection area (T) is not less than 30% of a radial length (H3) of the side-reinforcement rubber layer projection area (T).

6. The run-flat tire as set forth in any one of claims 1 to 5, **characterized in that** the maximal thickness (W1) of said heat-conducting rubber (11) is in a range of from 0.3 to 3.0 mm.

7. The run-flat tire as set forth in claim 1, **characterized in that** said heat-conducting rubber (11) comprises from 20 to 80% by mass of natural rubber and/or isoprene rubber based on 100% by mass of said diene rubber.

8. The run-flat tire as set forth in claim 1 or 7, **characterized in that** said heat-conducting rubber (11) comprises from 1 to 50 parts by mass of coal pitch-based carbon fiber based on 100 parts by mass of said base material rubber.

9. The run-flat tire as set forth in any one of claims 1, 7 and 8, **characterized in that** said coal pitch-based carbon fiber has an average diameter of from 1 to 80 µm and an average length of from 0.1 to 15 mm.

10. The run-flat tire as set forth in any one of claims 1 to 9, **characterized in that** at least one of outer surfaces (3A) of said sidewall portion (3) has a plurality of dimples (16) having a diameter (D2) of from 2 to 70 mm and a depth (e) of from 0.1 to 4.0 mm.

## Patentansprüche

1. Notlaufreifen (1), der mit einer Karkasse (6), die sich von einem Laufflächenabschnitt (2) durch einen Seitenwandabschnitt (3) zu einem Wulstkern (5) eines Wulstabschnitts (4) erstreckt, und einer Seitenverstärkungs-Kautschukschickt (9) versehen ist, die einen halbmondförmigen Querschnitt aufweist und innerhalb der Karkasse (6) in dem Seitenwandabschnitt (3) angeordnet ist; **dadurch gekennzeichnet, dass**
ein wärmeleitender Kautschuk (11), der einen Wärmeleitfähigkeitskoeffizienten von nicht weniger als 0,3 W/(m·K) aufweist, an der Innenhohlraumfläche (12) des Reifens (1) angeordnet ist, und
zumindest ein Teil des wärmeleitenden Kautschuks (11) in einer Seitenverstärkungs-Kautschukschichtprojizierungsfläche (T) angeordnet ist, an welcher sich die Seitenverstärkungskautschukschicht (11) in Richtung der Innenhohlraumfläche (12) des Reifens (1) projiziert, und der wärmeleitende Kautschuk (11) umfasst
Basismaterialkautschuk, der Dienkautschuk umfasst, und
Kohlefaser auf Teerpechbasis.

2. Notlaufreifen nach Anspruch 1, **dadurch gekennzeichnet, dass** sich der wärmeleitende Kautschuk (11) von der Seitenverstärkungs-Kautschukschichtprojizierungsfläche (T) bis zu zumindest einer Wulstunterseitenfläche (4a) des Wulstabschnitts (4) erstreckt.

3. Notlaufreifen nach Anspruch 2, **dadurch gekennzeichnet, dass** sich der wärmeleitende Kautschuk (11) über die Wulstunterseitenfläche (4a) bis zu einer axialen Außenseitenfläche (4b) des Wulstabschnitts (4) erstreckt.

4. Notlaufreifen nach einen der Ansprüche 1 bis 3, **dadurch gekennzeichnet, dass** der wärmeleitende Kautschuk (11) über eine gesamte Ausdehnung der Innenhohlraumfläche (12) des Reifens (1) angeordnet ist.

5. Notlaufreifen nach einen der Ansprüche 1 bis 3, **dadurch gekennzeichnet, dass**
ein radial inneres Ende (11 i) oder ein radial äußeres Ende (11o) des wärmeleitenden Kautschuks (11) innerhalb der Seitenverstärkungs-Kautschukschichtprojizierungsfläche (T) endet, und
eine radiale Länge (H4) des wärmeleitenden Kautschuks (11) innerhalb der Seitenverstärkungs-Kautschukschichtprojizierungsfläche (T) nicht kleiner als 30% einer radialen Länge (H3) der Seitenverstärkungs-Kautschukschichtprojizierungsfläche (T) ist.

6. Notlaufreifen nach einem der Ansprüche 1 bis 5, **dadurch gekennzeichnet, dass** die maximale Dicke (W1) der wärmeleitenden Schicht (11) in einem Bereich von 0,3 bis 3,0 mm liegt.

7. Notlaufreifen nach Anspruch 1, **dadurch gekennzeichnet, dass** der wärmeleitende Kautschuk (11) von 20 bis 80 Masse% Naturkautschuk und/oder Isoprenkautschuk bezogen auf 100 Masse% des Dienkautschuks umfasst.

8. Notlaufreifen nach Anspruch 1 oder 7, **dadurch gekennzeichnet, dass** der wärmeleitende Kautschuk (11) 1 bis 50 Masseteile Kohlefaser auf Teerpechbasis bezogen auf 100 Masseteile des Basismaterialkautschuks umfasst.

9. Notlaufreifen nach einem der Ansprüche 1, 7 und 8, **dadurch gekennzeichnet, dass** die Kohlefaser auf Teerpechbasis einen durchschnittlichen Durchmesser von 1 bis 80 µm und eine durchschnittliche Länge von 0,1 bis 15 mm aufweist.

10. Notlaufreifen nach einem der Ansprüche 1 bis 9, **dadurch gekennzeichnet, dass** zumindest eine von Außenflächen (3A) des Seitenwandabschnitts (3) eine Mehrzahl von Vertiefungen (16) aufweist, die einen Durchmesser (D2) von 2 bis 70 mm und eine Tiefe (e) von 0,1 bis 4,0 mm aufweisen.

## Revendications

1. Pneumatique pour roulement à plat (1) doté d'une carcasse (6) s'étendant depuis une portion formant bande de roulement (2) à travers une portion formant paroi latérale (3) jusqu'à une âme de talon (5) d'une portion formant talon (4), et une couche de caoutchouc de renforcement latérale (9) ayant une section transversale en forme de croissant et disposée à l'intérieur de la carcasse (6) dans ladite portion formant paroi latérale (3) ; **caractérisé en ce que**
un caoutchouc conducteur de chaleur (11) ayant un coefficient de conductivité thermique qui n'est pas inférieur à 0,3 W/(m·K) est disposé sur la surface (12) de la cavité intérieure du pneumatique (1), et au moins une partie dudit caoutchouc conducteur de chaleur (11) est disposée dans une zone en projection d'une couche de caoutchouc de renforcement latérale (T) dans laquelle la couche de caoutchouc de renforcement latérale (11) se projette jusque sur la surface (12) de la cavité intérieure du pneumatique (1), et
ledit caoutchouc conducteur de chaleur (11) comprend un caoutchouc de base comprenant du caoutchouc diène, et des fibres de carbone à base de poix de houille.

2. Pneumatique pour roulement à plat selon la revendication 1, **caractérisé en ce que** ledit caoutchouc conducteur de chaleur (11) s'étend depuis ladite zone en projection (T) de la couche de caoutchouc de renforcement latérale, au moins jusqu'à une surface inférieure de talon (4a) de ladite portion formant talon (4).

3. Pneumatique pour roulement à plat selon la revendication 2, **caractérisé en ce que** ledit caoutchouc conducteur de chaleur (11) s'étend à travers ladite surface inférieure de talon (4a) jusqu'à une surface axialement extérieure (4b) de ladite portion formant talon (4).

4. Pneumatique pour roulement à plat selon l'une quelconque des revendications 1 à 3, **caractérisé en ce que** ledit caoutchouc conducteur de chaleur (11) est disposé sur l'étendue entière de la surface (12) de la cavité intérieure du pneumatique (1).

5. Pneumatique pour roulement à plat selon l'une quelconque des revendications 1 à 3, **caractérisé en ce que**
une extrémité radialement intérieure (11i) ou une extrémité radialement extérieure (11o) dudit caoutchouc conducteur de chaleur (11) se termine à l'intérieur de la zone en projection (T) de la couche de caoutchouc de renforcement latérale, et
une longueur radiale (H4) du caoutchouc conducteur de chaleur (11) dans la zone en projection (T) de la couche de caoutchouc de renforcement latérale n'est pas inférieure à 30 % d'une longueur radiale (H3) de la zone en projection (T) de la couche de caoutchouc de renforcement latérale.

6. Pneumatique pour roulement à plat selon l'une quelconque des revendications 1 à 5, **caractérisé en ce que** l'épaisseur maximum (W1) dudit caoutchouc conducteur de chaleur (11) est dans une plage de 0,3 à 3,0 mm.

7. Pneumatique pour roulement à plat selon la revendication 1, **caractérisé en ce que** ledit caoutchouc conducteur de chaleur (11) comprend de 20 à 80 % en masse de caoutchouc naturel et/ou de caoutchouc isoprène, basé sur 100 % en masse dudit caoutchouc diène.

8. Pneumatique pour roulement à plat selon la revendication 1 ou 7, **caractérisé en ce que** ledit caoutchouc conducteur de chaleur (11) comprend de 1 à 50 parties en masse de fibres de carbone à base de poids de houille, basé sur 100 parties en masse dudit caoutchouc de base.

9. Pneumatique pour roulement à plat selon l'une quelconque des revendications 1, 7 et 8, **caractérisé en ce que** lesdites fibres de carbone à base de poids de houille ont un diamètre moyen de 1 à 80 µm et une longueur moyenne de 0,1 à 15 mm.

10. Pneumatique pour roulement à plat selon l'une quelconque des revendications 1 à 9, **caractérisé en ce que** l'une au moins des surfaces extérieures (3A) de ladite portion formant paroi latérale (3) comporte une pluralité de petites cuvettes (16) ayant un diamètre (D2) de 2 à 70 mm, et une profondeur (e) de 0,1 à 4,0 mm.
